# EUROPÄISCHE PATENTSCHRIFT

(11) **EP 2 558 718 B1**
(45) Veröffentlichungstag und Bekanntmachung des Hinweises auf die Patenterteilung: **09.11.2016**
(21) Anmeldenummer: 11722706.6
(22) Anmeldetag: 14.04.2011
(51) Int. Cl.: F03D 80/70, F16C 17/10

(54) **LAGERELEMENT**
BEARING ELEMENT
ÉLÉMENT DE PALIER

(30) Priorität: 14.04.2010 AT 5992010
(43) Veröffentlichungstag der Anmeldung: 20.02.2013
(60) Teilanmeldung: 16172461.2
(73) Patentinhaber: Miba Gleitlager Austria GmbH, 4663 Laakirchen (AT)
(72) Erfinder: KARI, Alexander, A-5330 Fuschl am See (AT); FORSTNER, Christian, A-4810 Gmunden (AT)
(74) Vertreter: Burger, Hannes
(86) Internationale Anmeldenummer: PCT/AT2011/000182
(87) Internationale Veröffentlichungsnummer: WO 2011/127510

(56) Entgegenhaltungen:
- WO-A2-01/48376
- DE-A1- 10 043 936
- DE-U1- 20 208 133
- JP-A- H09 112 564
- US-A- 1 593 251

## Beschreibung

Die Erfindung betrifft eine Windkraftanlage mit einem Rotor der eine Rotornabe aufweist, die sich auf einem Stator abstützt, wobei zwischen dem Rotor und dem Stator ein Lagerelement angeordnet ist, wobei das Lagerelement zumindest ein inneres Ringelement und zumindest ein äußeres Ringelement aufweist, wobei zwischen dem inneren Ringelement und dem äußeren Ringelement eine Gleitlagerung ausgebildet ist, die durch zumindest zwei in axialem Abstand zueinander angeordnete Gleitlager gebildet ist, wobei zumindest eines der oder die Gleitlager jeweils durch in Umfangsrichtung nebeneinander angeordnete, eine Stützschicht und eine darauf angeordnete Gleitschicht umfassende Gleitlager-Pads gebildet ist oder sind oder wobei die Gleitlager durch Gleitlagersegmente gebildet sind.

Obwohl Gleitlager im Vergleich zu Wälzlager eine deutlich höhere Lebensdauer aufweisen, werden derzeit noch hauptsächlich Wälzlager in Windkraftanlagen verwendet, insbesondere auch als Hauptlager für die Rotorlagerung. Diverse Studien zu Windkraftanlagen zeigen, dass die Ausfallursache "Lager" neben diversen anderen Ausfallursachen, welche im Bereich des Generators oder der Rotorblätter selbst bzw. des Rotors insgesamt anzusiedeln sind, eine durchaus hohe Häufigkeit aufweist, angesiedelt im mittleren Drittel bezogen auf sämtliche Ausfallursachen. Im Vergleich zu anderen Ausfällen von Windkraftanlagen zeigt sich hinsichtlich der Kostenseite aber ein völlig anderes Bild, dass nämlich Ausfälle in der Lagerung der Rotorwelle deutlich höhere Kosten sowie Stillstandszeiten verursachen als andere, üblicherweise auftretenden Ausfälle von Windkraftanlagen. Trotz der bewehrten Technologie "Wälzlager" führen Lagerausfälle insbesondere in der Multi-Megawattklasse zu einer deutlichen Reduzierung der Wirtschaftlichkeit von Windkraftanlagen bedingt durch die hohen Wartungskosten und Reparaturkosten bzw. durch die hohen Stillstandzeiten. Insbesondere bei so genannten Off-Shore-Anwendungen stellt dies aufgrund der schlechten Zugänglichkeit der Anlagen ein Problem dar, welches mit noch höheren Kosten verbunden ist. Begründet sind diese hohen Ausfallkosten bzw. Ausfallzeiten dadurch, dass bei einem Lagerausfall bei Verwendung von Wälzlagern in der Regel der gesamte Rotor ausgebaut werden muss.

Bedingt durch diese Problematik wurden im Stand der Technik vereinzelt bereits Gleitlageranwendungen in Windkraftanlagen beschrieben. So beschreibt zum Beispiel die DE 102 55 745 A1 eine Windenergieanlage mit einem an der Spitze eines Turms angeordneten Maschinenträger, mit einem an dem Maschinenträger befestigten Generatorstator, mit einer Rotorblätter tragenden Nabe und mit einem Generatorläufer, der an der Nabe befestigt ist, wobei der Generatorläufer oder die mit dem Generatorläufer verbundenen Nabe an einem Ort gelagert ist, der radial zwischen und/oder axial neben dem Generatorstator und dem Generatorläufer liegt und sich dabei auf dem Statorgehäuse abstützt. Die Lagerung kann mittels eines hydrostatisch ausgebildeten Gleitlagers erfolgen, wobei das Gleitlager als segmentiertes Gleitlager ausgebildet sein kann, das in die Polschuhe des Generators integriert ist. Es wird damit eine Verkürzung der mechanischen Lastpfade und eine Gewichtsreduktion der Windenergieanlage im Bereich der Anlagengondel im Turmkopf erreicht.

Des Weiteren wurden im Bereich von Übersetzungsgetrieben für Windgeneratoren Gleitlageranwendungen im Stand der Technik beschrieben, beispielsweise in der EP 1 184 567 A2. Es wird darin ein Getriebe für Windgeneratoren mit einem Rotor, der über eine mehrstufige Planetengetriebeanordnung und mindestens eine Stirnradstufe mit mindestens einem Generator in Antriebsverbindung steht, beschrieben. Der Rotor ist im Gehäuse des Getriebes gelagert, insbesondere in Gleitlagern geführt, wobei mindestens ein Lager Axialkräfte aufnehmen kann, und die Lager hydrostatisch anhebbar sind und durch gezielte Ansteuerung einer Ölpumpe in einen Betrieb mit teil- oder vollhydrodynamischer Schmierung schaltbar sind.

Aus der DE 100 43 936 A1 ist ein Gleitlager für ein Turmdrehkranzlager einer Windkraftanlage bekannt, das einen Außenring und einen dazu konzentrisch angeordneten Innenring und Gleitbelagträger aufweist, wobei an den Gleitbelagträgern Gleitbeläge befestigt sind. Die Gleitbelagträger sind in radial verlaufenden Bohrungen des Innenringes angeordnet und greifen in eine umlaufende Nut auf der Innenseite des Außenringes ein. Es wird damit die Austauschbarkeit des Gleitlagers verbessert.

Die DE 10 2005 051 912 A1 wiederum beschreibt allgemein die Möglichkeit der Lagerung der Rotorblätter über Gleitlager. Andere Möglichkeiten der Lagerung sind in WO 0148376, DE 20208133 U, US 1593251, JP 09112564 offenbart.

Die Aufgabe der vorliegenden Erfindung besteht darin, eine verbesserte Gleitlagerung für die Rotornabe einer Windkraftanlage zur Verfügung zu stellen.

Diese Aufgabe der Erfindung wird durch die Merkmale des Anspruchs 1 gelöst.

Von Vorteil ist dabei, dass durch die beiden beabstandeten Gleitlager eine bessere, radiale bzw. axiale Lagerung bzw. Führung der Rotornabe der Windkraftanlage erreicht wird. Darüber hinaus wird durch die beiden Gleitlager erreicht, dass die Gleitlagerung an sich höheren Belastungen ausgesetzt werden kann, wie diese insbesondere im so genannten Trudelbetrieb oder bei Start/Stopp-Zyklen von Windkraftanlagen auftreten können bzw. auch bei Windspitzen sowie wechselnden Windrichtungen auftreten. Überraschenderweise hat sich zudem herausgestellt, dass eine hydrostatische Anfahrunterstützung der Gleitlagerung nicht erforderlich ist, wodurch eine konstruktiv einfachere Lösung dieser Gleiterlagerung und damit eine entsprechende Kostenersparnis erzielbar ist.

Nach einer bevorzugten Ausführungsvariante der Erfindung ist vorgesehen, dass zumindest eines der Gleitlager durch in Umfangsrichtung nebeneinander angeordnete Gleitlager-Pads gebildet ist. Mit der Aufteilung der gesamten Lagerfläche auf einzelne Gleitlager-Pads wird erreicht, dass das Gleitlager an sich einfacher zu handhaben sind, sowohl hinsichtlich des Einbaus der Gleitlager-Pads als auch im Hinblick auf den Ausbau im Falle einer möglichen Störung der Lagerung. Zudem wird damit der Vorteil erreicht, dass bei einer durch die Lagerung verursachten Betriebsstörung der Windkraftanlage lediglich relativ kleine Einheiten ausgetauscht werden müssen, wodurch sich im Vergleich zu Wälzlagern oder im Vergleich zu Gleitlagerhalbschalen nicht nur die Stillstandszeiten durch reduzierte Wartungsarbeiten verringern lassen, sondern zudem auch die Wirtschaftlichkeit der Anlage durch Reduktion der Wartungskosten verbessern lässt, indem nämlich nur genau jene Bereiche der Gleitlagerung ausgetauscht werden müssen, in denen der Fehler aufgetreten ist, also nicht wie bei Gleitlagerhalbschalen eine vollständige Halbschale ausgetauscht werden muss wobei der Austausch insbesondere ohne Demontage des Rotors erfolgen kann. Selbstverständlich ist bei Bedarf aber der Austausch sämtlicher Gleitlager-Pads auch bei dieser Ausführungsvariante möglich.

Gemäß einer Ausführungsvariante dazu ist vorgesehen, dass die Anzahl der Gleitlager-Pads pro Gleitlager ausgewählt ist aus einem Bereich mit einer unteren Grenze von D/10 und einer oberen Grenze von D/2, insbesondere einem Bereich mit einer unteren Grenze von D/8 und einer oberen Grenze von D/4, wobei D in Zentimeter der maximale Durchmesser des inneren Ringelementes ist. Es wird damit erreicht, dass trotz der Aufteilung der Gleitlager auf einzelne Pads ein relativ großer Anteil an der maximal zur Verfügung stehenden, theoretischen Gleitlagerfläche für die Lagerung bzw. die Lastabtragung durch die Lager zur Verfügung steht.

Eine Verbesserung der Lagerfunktion wird erreicht, wenn die beiden Gleitlager in winkelig zueinander stehenden Ebenen angeordnet sind, da damit Kippmomente besser aufgenommen werden können.

Bevorzugt ist dabei der Winkel, den die beiden Ebenen miteinander einschließen, ausgewählt aus einem Bereich mit einer unteren Grenze von 30° und einer oberen Grenze von 75°, insbesondere aus einem Bereich mit einer unteren Grenze von 35° und einer oberen Grenze von 60°. Es konnten damit die voranstehend beschriebenen Effekte betreffend die beiden winkelig zueinander stehenden Gleitlager weiter verbessert werden.

Eine einfache Möglichkeit zur Anordnung und Fixierung der Gleitlager-Pads wird erreicht, wenn das äußere Ringelement auf der den Gleitlager-Pads zugewandten Oberfläche Nuten aufweist und die Gleitlager-Pads teilweise in diesen Nuten angeordnet sind.

Eine weitere Verbesserung dieser Fixierung der Gleitlager-Pads wird erreicht, wenn die Nuten einen sich in Richtung auf einen Nutengrund sich erweiternden Querschnitt aufweisen, insbesondere einen schwalbenschwanzförmigen oder T-förmigen Querschnitt aufweisen, und die Gleitlager-Pads einen dazu entsprechenden Querschnitt aufweisen.

Für eine einfache Austauschbarkeit der Gleitlager-Pads sowie eine bessere Justierbarkeit der Gleitlager-Pads ist es gemäß einer Ausführungsvariante der Erfindung vorgesehen, dass die Gleitlager-Pads mit einem lösbaren Befestigungselement am äußeren Ringelement befestigt sind.

Es kann weiters vorgesehen sein, dass das innere Ringelement aus zwei in axialer Richtung nebeneinander angeordneten und in axialer Richtung zueinander beabstandeten Ringen besteht, wobei gegebenenfalls zwischen den Ringen ein Abstandselement angeordnet ist, und das Befestigungselement zumindest teilweise zwischen diesen beiden Ringen angeordnet ist. Es wird damit eine einfachere Austauschbarkeit der Gleitlager-Pads erreicht, wobei aufgrund der Gewichtskraft der Rotor, das heißt die Rotornabe, im Stillstand im Bereich der unteren Gleitlager-Pads aufliegt, sodass die oberen Gleitlager-Pads lastfrei sind und damit aus der Gleitlagerung entnommen werden können. Durch die beiden Ringe wird dabei zusätzlich erreicht, dass diese Gleitlager-Pads im Bereich zwischen den Ringen entnommen werden können, indem das Befestigungselement gelöst wird und somit die Fixierung der Gleitlager-Pads am äußeren Ringelement freigegeben wird, sodass in weiterer Folge diese Gleitlager-Pads aus den Nuten einfach heraus geschoben werden können.

Gemäß der Erfindung ist vorgesehen, dass jeweils zwei in axialer Richtung nebeneinander angeordnete Gleitlager-Pads über ein gemeinsames Befestigungselement am äußeren Ringelement fixiert sind, wodurch sich einerseits der konstruktive Aufbau der Gleitlagerung an sich vereinfachen lässt und zudem auch Wartungsarbeiten in kürzerer Zeit durchgeführt werden können. Es wird damit auch die Einstellung der Gleitlagerung vereinfacht.

Für einen besseren Öleinzug ist vorgesehen, dass die Gleitlager-Pads an zumindest einer Stirnseite zumindest teilweise mit einer Rundung versehen sind.

Nach einer Ausführungsvariante der Gleitlagerung ist vorgesehen, dass die beiden Gleitlager in einem Abstand angeordnet sind, der zumindest 40 % einer maximalen Umfangslänge des inneren Ringelementes beträgt. Durch die damit relativ weit voneinander entfernt angeordneten Gleitlager können Kippmomente, welche über die Rotornabe auf die Gleitlagerung wirken, besser abgefangen werden.

Es besteht bei dieser Ausführungsvariante die Möglichkeit, dass die Gleitlager durch Gleitlagersegmente gebildet werden, um damit die Handhabbarkeit dieser relativ großen Gleitlager zu verbessern.

Bei dieser Ausführungsvariante der Erfindung kann vorgesehen sein, dass zwischen den aufeinander zu weisenden Stirnflächen der Gleitlagersegmente eines Gleitlagers ein Keilelement angeordnet ist, wobei dieses Keilelement mit dem inneren oder äußeren Ringelement verschraubt werden kann, wodurch einerseits eine Anpressung, das heißt Fixierung der Gleitlagersegmente erreicht wird und damit auch die Einstellung der Gleitlagerung verbessert wird, wobei zusätzlich erreicht wird, dass durch diese Keilelemente die Austauschbarkeit der Gleitlagersegmente vereinfacht werden kann, indem durch einfaches Lösen der Keilelemente die Fixierung der Gleitlagersegmente freigegeben wird.

Gemäß einer Ausführungsvariante dazu kann vorgesehen sein, dass die Stirnflächen der Gleitlagersegmente abgeschrägt sind, wodurch die Keilwirkung des Keilelementes unterstützt wird.

In einem Segmentrücken der Gleitlagersegmente können Nuten und/oder Bohrungen angeordnet sein, um damit eine gezielte Ölzuführung pro Segment zu erreichen, und zwar in jene Bereiche der Gleitlagerung bzw. der Gleitlagersegmente, welche einer erhöhten Belastung ausgesetzt sind. Es kann damit erreicht werden, dass damit lediglich einer Mindestmenge an Öl den Gleitlagersegmenten zugeführt werden muss, sodass also keine hydrostatische Anfahrunterstützung, welche üblicherweise mit Öldrücken über 1 bar, normalerweise aber deutlich über 100 bar arbeitet, erforderlich ist.

Die Gleitlager sind bevorzugt durch Mehrschichtgleitlager gebildet, um damit eine Verbesserung der Lagerfunktion, insbesondere der Gleitfähigkeit und der Stützfunktion dieser Gleitlager zu erreichen.

Dabei kann eine oberste Schicht der Mehrschichtgleitlager eine unterbrochene Oberfläche aufweisen, einerseits um eine Ölzuführung zur Gleitfläche zu erreichen. Andererseits wurde gefunden, dass damit durch eine bessere Lastverteilung die Lastaufnahmefähigkeit der Gleitlager erhöht werden kann.

In völliger Abkehr der Auffassung, dass die der Rotornabe zugewandte Gleitschicht relativ weich sein sollte, wird erfindungsgemäß nach einer Ausführungsvariante eine Gleitschicht verwendet, die eine Härte von zumindest 75 HV (0,001), insbesondere zumindest 100 HV (0,001), zumindest an der Gleitoberfläche aufweist, sodass also keine weichen Lagerwerkstoffe verwendet werden. Es wird damit eine Erhöhung der Lebensdauer der Lagerelemente erreicht, ohne bzw. ohne gravierende Einbußen hinsichtlich der Gleitfähigkeit dieser Lagerelemente, das heißt der Gleitlager. Zudem konnte dabei beobachtet werden, dass durch die Verwendung von harten Gleitschichten der Öleinzug, insbesondere in der Anfahrphase, verbessert ist, sodass also keine hydrostatische Unterstützung in der Anfahrphase erforderlich ist. Überraschenderweise sind auch Gleitlacke als Gleitschicht einsetzbar, obwohl diese eine Härte nach Vickers von ca. 25 HV (0,001) bis 60 HV (0,001) aufweisen, also deutlich weicher sind, als voranstehend beschriebene Gleitschichten, wobei hier eine Steigerung der Härte durch Zugabe von entsprechenden Hartpartikeln möglich ist.

Es ist durch das erfindungsgemäße Lagerelement möglich, die Windkraftanlage ausschließlich hydrodynamisch im Bereich der Lagerung zu betreiben, sodass auf konstruktive Maßnahmen zur Einhaltung eines bestimmten Mindestöldruckes, der üblicherweise bei hydrostatischen Anlagen mindestens 1 bar, normalerweise aber deutlich über 100 bar beträgt, verzichtet werden kann, sodass die Windkraftanlage an sich konstruktiv einfacher ausgebildet werden kann.

Gemäß einer Ausführungsvariante der Windkraftanlage ist vorgesehen, dass das innere Ringelement des Lagerelementes ein Teil der Rotorwelle und das äußere Ringelement ein Teil des Stators ist, wodurch sich wiederum der konstruktive Aufbau der Gleitlagerung vereinfachen lässt.

Schließlich kann nach einer Ausführungsvariante der Windkraftanlage vorgesehen sein, dass die Gleitlager-Pads durch den Stator selbst entfernbar sind, wodurch die Zugängigkeit dieser Gleitlager-Pads im Falle von Wartungsarbeiten vereinfacht ist und somit auf große Hebemaschinen, wie dies beispielsweise für den Austausch von Wälzlagern erforderlich sind, verzichtet werden kann, sodass damit die Stillstandzeiten in Folge von Wartungsarbeiten am Lager, insbesondere am Hauptlager, reduziert werden können.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einer Windkraftanlage im Teilschnitt;
- Fig. 2: eine erste Ausführungsvariante eines Lagerelementes in Seitenansicht geschnitten;
- Fig. 3: ein Gleitlager-Pad in Schrägansicht;
- Fig. 4: einen Ausschnitt aus einer Anordnung von Gleitlager-Pads in Schrägansicht von unten;
- Fig. 5: einen Ausschnitt einer Gleitlagerung in Seitenansicht geschnitten;
- Fig. 6: einen Ausschnitt aus einer weiteren Ausführungsvariante einer Gleitlagerung in Seitenansicht geschnitten;
- Fig. 7: ein Gleitlagersegment in Ansicht auf die Gleitfläche;
- Fig. 8: das Gleitlagersegment nach Fig. 7 in Schrägansicht auf den Rücken;
- Fig. 9: teilweise zwei Gleitlagersegmente mit dazwischen angeordnetem Keilelement.

Einführen sei festgehalten, dass die in der gesamten Beschreibung enthaltenen Offenbarungen sinngemäß auf gleiche Teile bzw. gleiche Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige erfindungsgemäße Lösungen darstellen.

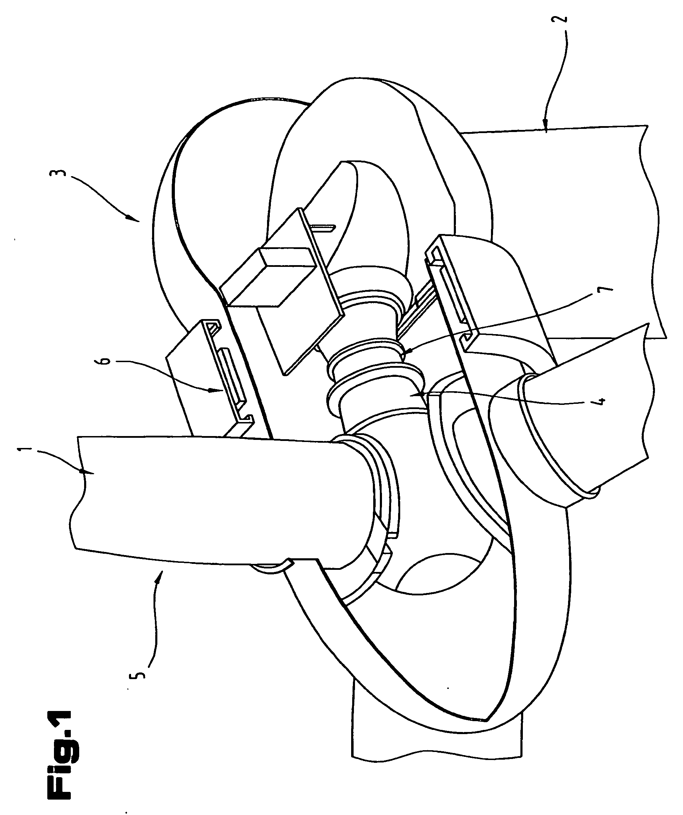

Fig. 1 zeigt in Schrägansicht und teilweise geschnitten einen Ausschnitt aus einer Windkraftanlage 1, wie sie im Prinzip aus dem Stand der Technik bekannt ist. Diese Windkraftanlage 1 umfasst einen Turm 2, an dessen Spitze eine Gondel 3, angeordnet ist. In dieser Gondel 3 ist einen Rotomabe 4 angeordnet, die an ihrem einen Ende Rotorblätter 5 trägt, insbesondere drehbeweglich. Dem anderen Ende ist zur Stromerzeugung ein Generator 6, der in diesem Fall als Ringgenerator ausgeführt ist, zugeordnet. Die Rotorwelle 4 ist über ein Lagerelement 7 drehbeweglich in der Gondel 3 gelagert. Das Lagerelement 7 ist das so genannte Hauptlager der Windkraftanlage 1.

Wie aus Fig. 1 ersichtlich ist, handelt es sich bei der Windkraftanlage 1 um eine getriebelose Ausführung, das heißt, dass zwischen dem Rotor selbst, das heißt den Rotorblättern 5, und dem Generator 6 kein Übersetzungsgetriebe vorhanden ist. Es handelt sich dabei um einen so genannten Langsamläufer. Zum Unterschied dazu sind aus dem Stand der Technik auch Windkraftanlagen bekannt, die zwischen dem Rotor und dem Generator ein Übersetzungsgetriebe, häufig ein Planetengetriebe, aufweisen, sodass der Rotor des Generators schneller läuft als die Rotornabe.

Bevorzugt bezieht sich die Erfindung auf den erstgenannten, das heißt den getriebelosen Typ von Windkraftanlagen 1, wenngleich die Erfindung prinzipiell auch bei Windkraftanlagen mit Übersetzungsgetriebe angewandt werden kann.

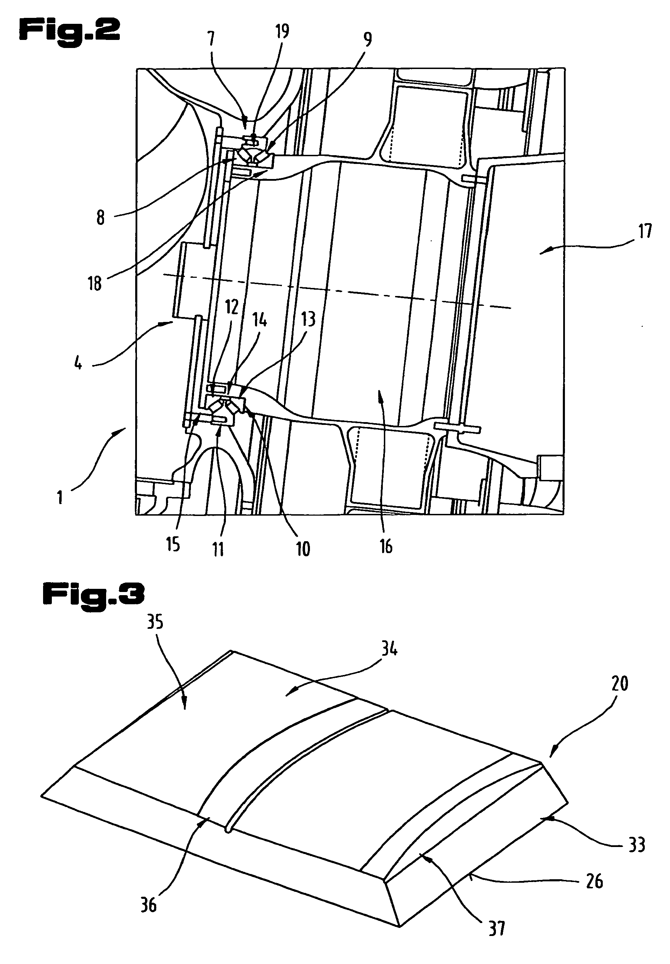

Die Fig. 2 bis 5 zeigen eine erste Ausführungsvariante des erfindungsgemäßen Lagerelementes 7. Dabei ist in Fig. 2 ein Ausschnitt aus der Windkraftanlage 1 im Bereich der Rotomabe 4 gezeigt. Das Lagerelement 7 wird durch eine Gleitlagerung mit zwei in axialem Abstand zueinander angeordneten Gleitlagern 8,9 gebildet bzw. umfasst diese. Mit axialem Abstand ist dabei die Richtung entlang der Längsmittelachse durch die Rotornabe 4 gemeint.

Neben den beiden Gleitlagern 8, 9 umfasst das Lagerelement 7 weiters ein inneres Ringelement 10, sowie ein äußeres Ringelement 11. Das innere Ringelement 10 ist zweigeteilt ausgeführt mit einem ersten Ring 12 und einen zweiten Ring 13, wobei zwischen den Ringen 12, 13 ein Abstandselement 14 angeordnet ist, sodass die beiden Ringe 12, 13 in axialer Richtung voneinander beabstandet sind.

Die Gleitlager 8, 9 sind zwischen diesen beiden Ringelementen 10, 11 angeordnet, wobei das äußere Ringelement 11 drehbeweglich ist und das innere Ringelement 10 stationär angeordnet ist, das heißt fixiert ist. Das äußere Ringelement 11 ist zudem über eine entsprechende Befestigungsanordnung 15 mit der Rotornabe 4 bzw. dem Rotor verbunden. Zur Befestigung des inneren Ringelementes 10, das heißt der beiden Ringe 12, 13 bei dieser Ausführungsvariante, kann an einem Generator-Ständer 16, der an einem Maschinenträger 17 befestigt ist, eine Ringnut 18 in einer äußeren Oberfläche ausgebildet sein, in der das innere Ringelement 10 zumindest teilweise angeordnet, insbesondere fixiert ist.

Die beiden Gleitlager 8, 9 sind bei dieser Ausführungsvariante bevorzugt in zwei verschiedenen Ebenen angeordnet, die miteinander einen Winkel 19 einschließen. Der Winkel 19 kann dabei ausgewählt sein aus einem Bereich mit einer unteren Grenze von 30° und einer oberen Grenze von 75°, insbesondere aus einem Bereich mit einer unteren Grenze von 35 ° und einer oberen Grenze von 60 °. Durch die winkelige Anordnung der beiden Gleitlager 8, 9 können Kippmomente besser von dem Lagerelement 7 aufgenommen werden.

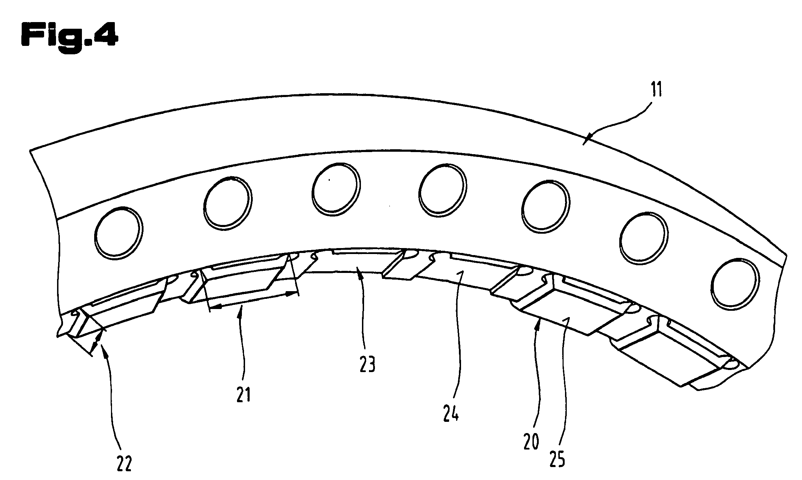

Wie aus den Fig. 3 und 4 ersichtlich ist, sind die beiden Gleitlager 8, 9 nach Fig. 2 durch Gleitlager-Pads 20 gebildet bzw. umfassen diese Gleitlager-Pads 20. Dabei sind in Umfangsrichtung um den Generator-Ständer 16 verteilt nebeneinander, insbesondere mit Abstand, mehrere dieser Gleitlager-Pads 20 angeordnet, um so die Lagerfläche auszubilden. Insbesondere ist dabei die Anzahl der Gleitlager-Pads 20 pro Gleitlager 8, 9 ausgewählt aus einem Bereich mit einer unteren Grenze von D/10 und einer oberen Grenze von D/2, wobei D in Zentimeter den maximalen Durchmesser des inneren Ringelementes 10 bezeichnet. Beispielsweise können also bei einem Lagerdurchmesser von 2,2 m 50 derartige Gleitlager-Pads 20 über den Umfang verteilt angeordnet sein.

Selbstverständlich richtet sich jedoch die Anzahl der Gleitlager-Pads 20 nach der Größe des Umfanges, sodass eine davon unterschiedliche Anzahl an Gleitlager-Pads 20 angeordnet sein kann. Diese Gleitlager-Pads 20 können beispielsweise eine Länge 21 in Umfangsrichtung von 122 mm sowie eine Breite 22 senkrecht dazu von 194 mm aufweisen. Beispielsweise können diese Gleitlager-Pads eine Größe in der Größe von DIN A5 bis DIN A4 aufweisen.

Es besteht auch die Möglichkeit, dass nur eines der Gleitlager 8, 9 mit derartigen Gleitlager-Pads 20 versehen ist.

Die Gleitlager-Pads 20 sind bevorzugt am äußeren Ringelement 11 befestigt. Dazu kann gemäß einer Ausführungsvariante vorgesehen sein, wie dies aus Fig. 4 ersichtlich ist, dass in diesem äußeren Ringelement 20 auf der den Gleitlager-Pads 20 zugewandten Oberfläche Nuten 23 angeordnet sind, in die die Gleitlager-Pads 20 eingeschoben werden können. Vorzugsweise weisen diese Nuten 23 einen sich von der Oberfläche in Richtung auf einen Nutengrund 24 erweiternden Querschnitt auf, insbesondere sind diese Nuten 23 im Querschnitt zumindest annährend schwalbenschwanzförmig oder T-förmig ausgebildet, wobei die Gleitlager-Pads 20 einen dazu komplementären Querschnittsverlauf aufweisen, also einen sich vergrößernden Querschnitt von einer Gleitoberfläche 25 in Richtung auf einen Gleitlager-Padrücken 26. Es wird damit zumindest ansatzweise eine Fixierung dieser Gleitlager-Pads 20 in radialer Richtung erreicht. Die Querschnittserweiterung kann dabei an allen Seitenwänden der Nuten 23 oder nur an einzelnen der Seitenwände, beispielsweise nur an der hinteren Seitenwand, ausgebildet sein.

Es besteht weiters die Möglichkeit, dass diese Nuten 23 in den Eckbereichen mit Rundungen versehen sind - vorzugsweise mit Ausnahme der vorderen Eckbereiche, an denen die Gleitlager-Pads eingeschoben werden, wie dies ebenfalls auf Fig. 4 ersichtlich ist.

Die durch das innere Ringelement 10, das heißt die Ringe 12, 13 bei dieser Ausführungsvariante, gebildete Gegenlauffläche, wird insbesondere durch Stahl gebildet, sodass also dieses Ringelement 10 aus Stahl geformt sein kann, ebenso wie das äußere Ringelement 11. o

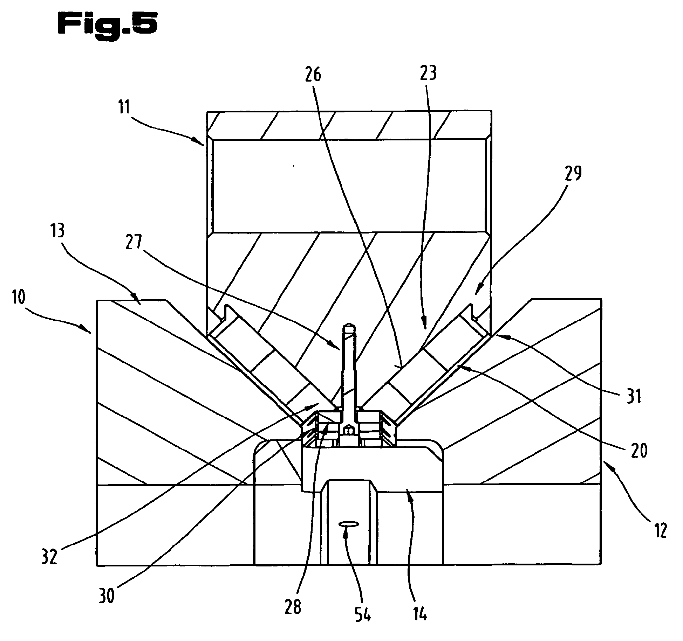

Die Befestigung der Gleitlager-Pads 20 am äußeren Ringelement 11, damit die Gleitlager-Pads 20 während des Betriebes besser gegen das Herausgleiten aus den Nuten 23 geschützt sind, kann über verschiedenste Methoden erfolgen, beispielsweise durch Schweißstellen, Lötstellen, Klemmelemente, etc. Bevorzugt erfolgt die Befestigung allerdings, wie dies aus Fig. 5 ersichtlich ist, über ein lösbares Befestigungselement 27, insbesondere eine Schraube. Angemerkt sei, dass die Fig. 5 nochmals in einer größeren Darstellung das äußere Ringelement 11, das innere Ringelement 10, bestehend aus den beiden Ringen 12, 13, sowie das dazwischen angeordneten Abstandselement 14 zeigt.

Das Befestigungselement 27 ist bevorzugt durch eine Gewindeschraube gebildet, wobei die Gleitlager-Pads 20 über Beilagscheiben 28 vor dem Herausrutschen aus den Nuten 23 im äußeren Ringelement 11 gesichert sind. Dazu können die Gleitlager-Pads 20, wie dies in Fig. 5 dargestellt ist, im Bereich des Gleitlager-Padrückens 26 zumindest teilweise in in Richtung der Breite 22 einander gegenüberliegenden Endbereichen 29, 30 zumindest annährend keilförmig ausgebildet sein (in Richtung der Länge 21 betrachtet), wobei ein Keil 31 zur Fixierung des Gleitlager-Pads 20 in der Nut 23 des äußeren Ringelementes 11 dient, wozu diese Nut 23 eine dazu entsprechende, konträre Kontur aufweist, und ein weiterer Keil 32 an den Beilagscheiben 28 aufliegt. Es wird damit erreicht, dass durch die Schrägstellung der Gleitlager-Pads 20 und durch das Hineinschrauben des Befestigungselementes 27 das Gleitlager-Pad 20 in die Nut 23 des äußeren Ringelementes 11 hineingedrückt wird.

Wie insbesondere aus Fig. 5 ersichtlich ist, ist das Befestigungselement 27 - zumindest annähernd zentrisch in axialer Richtung betrachtet - im äußeren Ringelement 11 angeordnet, sodass durch ein Befestigungselement 27 jeweils zwei einander gegenüberliegende Gleitlager-Pads 20 der beiden Gleitlager 8, 9 gehalten und fixiert werden können.

Die Gleitlager-Pads 20 weisen bevorzugt einen Mehrschichtaufbau auf, wie dies aus Fig. 3 ersichtlich ist und umfassen zumindest eine Stützschicht 33 sowie eine darauf angeordnete Gleitschicht 34. Gegebenenfalls können zwischen der Stützschicht 33 und der Gleitschicht 34 noch weitere Schichten angeordnet sein, beispielsweise eine Lagermetallschicht und/oder eine Bindeschicht bzw. eine Diffusionssperrschicht.

Die Gleitschicht 34 ist bevorzugt zumindest im Oberflächenbereich unterbrochen ausgeführt, sodass mehrere, insbesondere zwei, Gleitschichtteilflächen 35 ausgebildet sind. Es wurde nämlich festgestellt, dass durch die geteilte Gleitschicht 34 eine bessere Lastverteilung auf diese erreicht werden kann.

Selbstverständlich ist es im Rahmen der Erfindung möglich, mehrere Unterteilungen vorzunehmen, insbesondere auch drei, vier, fünf oder sechs Gleitschichtteilflächen 35, je nach Abhängigkeit der Größe der Fläche der Gleitschicht 34, auszubilden.

Zwischen den Gleitschichtteilflächen 35 können Ausnehmungen 36, insbesondere Nuten, vorgesehen sein, die sich beispielsweise nur über einen Teil der Schichtdicke der Gleitschicht 34 oder über die gesamte Schichtdicke erstrecken können. Diese Nuten 36 können insbesondere als Ölzufühmuten verwendet werden.

Es ist weiters gemäß einer Ausführungsvariante der Erfindung vorgesehen, dass eine Stirnseite 37 zumindest der Gleitschicht 34 zumindest teilweise mit einer Rundung versehen ist, um damit einen besseren Öleinzug im Bereich der Gleitschicht 33, das heißt der Lauffläche der Gleitlager-Pads 20, zu erreichen. Wie insbesondere aus Fig. 4 ersichtlich ist, erstreckt sich diese Rundung im Bereich zumindest einer der Seitenwände der Nuten 23 im äußeren Ringelement 11, wobei gegebenenfalls beide Seitenbereich, das heißt beide Stirnseiten 37, die einander gegenüberliegen und an den Seitenwänden der Nut anliegen, zumindest der Gleitschicht 34 mit einer derartigen Rundung versehen sein können, sodass die Gleitschicht 33 in Draufsicht eine hyperbelartigen Außenkontur aufweist und damit ein Mittenbereich der Gleitschicht 34 weiter von der Seitenwand der Nuten 23 entfernt ist als ein Eckbereich.

Selbstverständlich ist die Oberfläche der Gleitlager-Pads 20 ebenfalls gerundet ausgeführt sein, das heißt die Oberfläche zumindest der Gleitschicht 34 entsprechend an die Rundung des inneren Ringelementes 10 angepasst.

Insbesondere besteht die Gleitschicht 34 aus einem relativ harten Gleitlagerwerkstoff mit einer Härte von zumindest 75 HV (0,001), insbesondere von zumindest 100 HV (0,001), zumindest an der Gleitschichtoberfläche 35. Beispielsweise kann die Gleitschicht aus einem Werkstoff gebildet sein, ausgewählt aus einer Gruppe umfassend Aluminiumbasislegierungen, wie AlSn20Cu, AlZn4Si3, Silberbasislegierungen oder Kupferbasislegierungen, gegebenenfalls jeweils mit Bismut, Bismutbasislegierungen.

Wie bereits voranstehend bereits erwähnt, kann die Gleitschicht 34 auch durch einen Gleitlack gebildet sein, wobei in diesem Fall die Gleitschicht 34 eine Härte zwischen 25 HV (0,001) bis 60 HV (0,001) aufweist.

Als Gleitlacke können zum Beispiel verwendet werden Polytetrafluorethylen, fluorhältige Harze, wie z.B. Perfluoralkoxy-Copolymere, Polyfluoralkoxy-PolytetrafluorethylenCopolymere, Ethylen-tetrafluorethylen, Polychlortrifluorethylen, fluorierte Ethylen-Propylen Copolymere, Polyvinylfluorid, Polyvinylidenfluorid, alternierende Copolymere, statistische Copolymere, wie z.B. Perfluorethylenpropylen, Polyesterimide, Bismaleimide, Polyimidharze, wie z.B. Carboranimide, aromatische Polyimidharze, wasserstofffreie Polyimidharze, Poly-triazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikone, Polyarylether, Polyarylketone, Polyaryletherketone, Polyaryletheretherketone, Polyetheretherketone, Polyetherketone, Polyvinylidendiflouride, Polyethylensulfide, Allylensulfid, Poly-triazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide, sowie Copolymere daraus.

Bevorzugt wird ein Gleitlack der in trockenem Zustand aus 40 Gew.-% bis 45 Gew.-% MoS2, 20 Gew.-% bis 25 Gew.-% Graphit und 30 Gew.-% bis 40 Gew.-% Polyamidimid besteht, wobei gegebenenfalls noch Hartpartikel, wie z.B. Oxide, Nitride oder Carbide, im dem Gleitlack in einem Anteil von in Summe maximal 20 Gew.-% enthalten sein können, die einen Anteil der Festschmierstoffe ersetzen.

Die Stützschicht 33 kann beispielsweise durch Stahl oder eine Kupferbasislegierung, insbesondere mit Zink, beispielsweise CuZn31Si, CuSnZn, eine AlZn- oder eine CuAl-Legierung gebildet sein.

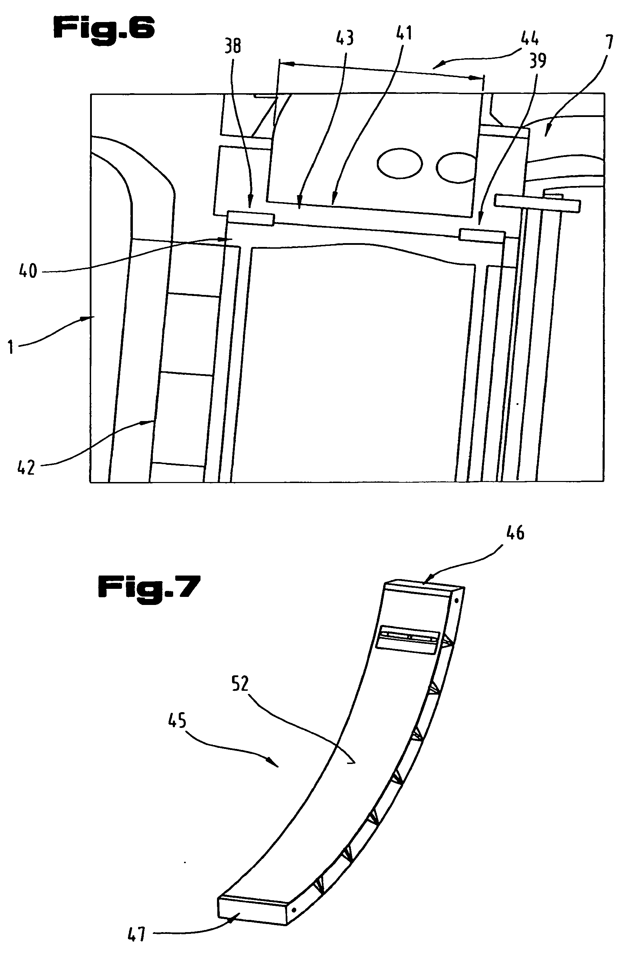

Die Fig. 6 bis 8 zeigen eine andere Ausführungsvariante des Lagerelementes 7 für eine Windkraftanlage 1. Wiederum besteht das Lagerelement 7 aus zwei in axialem Abstand zueinander angeordneten Gleitlagern 38, 39 die zwischen einem inneren Ringelement 40 und einem äußeren Ringelement 41 angeordnet sind. In der bevorzugten Ausführungsvariante ist dabei das innere Ringelement 40 ein Teil einer Rotornabe 42 und das äußere Ringelement 41 ein Teil eines Stators 43 der Windkraftanlage 1. Anders als bei voranstehend beschriebener Ausführungsvariante der Erfindung, ist also bei dieser Ausführungsvariante das innere Ringelement 40 drehbeweglich und das äußere Ringelement 41 fixiert angeordnet.

Die beiden Gleitlager 38, 39 sind bei dieser Ausführungsvariante in einer Ebene angeordnet, wobei es selbstverständlich möglich ist, dass diese beiden Gleitlager 38, 39 auch bei dieser Ausführungsvariante in zwei winkelig zueinander stehenden Ebenen angeordnet werden.

Bevorzugt sind diese beiden Gleitlager 38, 39 aber relativ weit voneinander beabstandet, wobei ein Abstand 44 zwischen den beiden Gleitlagern 38, 39, gemessen zwischen den aufeinander zuweisenden Stirnflächen in Umfangsrichtung der Gleitlager 38, 39, zumindest 40 %, insbesondere zumindest 50 %, einer maximalen Umfangslänge des inneren Ringelementes 40 beträgt. Durch diese weite Beabstandung der beiden Gleitlager 38, 39 ist es möglich, dass das Lagerelement 7 höheren Belastungen ausgesetzt werden kann, insbesondere können damit am Rotor wirkende Kippmomente besser aufgenommen werden.

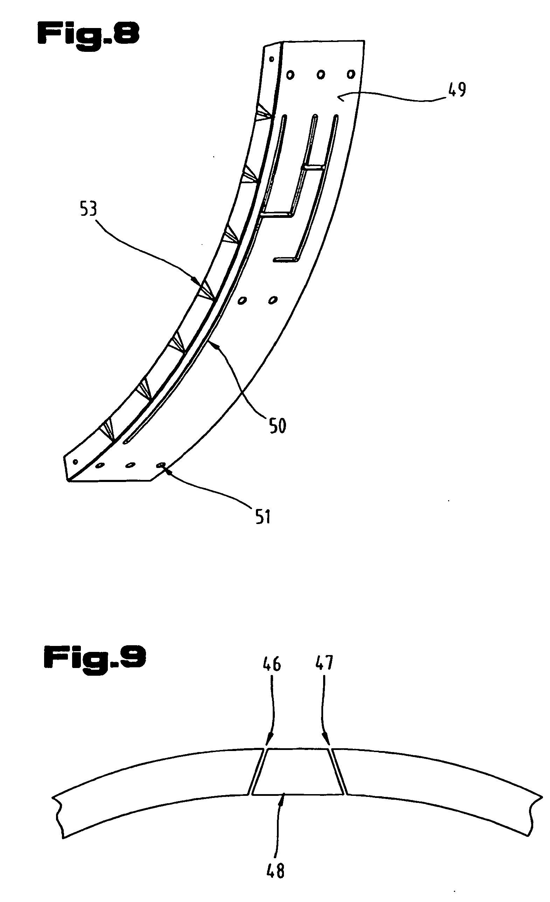

Bevorzugt sind die beiden Gleitlager 38, 39 als Gleitlagersegmente 45 ausgebildet, wie dies aus den Fig. 7 und 8 ersichtlich ist, sodass über den Umfang des inneren Ringelementes 40 mehrere Gleitlagersegmente 45 ein Gleitlager 38 bzw. 39 bilden. Zur Befestigung der Gleitlagersegmente 45 am Stator 43 können wiederum unterschiedlichste Verfahren und Methoden eingesetzt werden, wie bereits voranstehend beschrieben, wobei gemäß einer bevorzugten Ausführungsvariante die Gleitlagersegmente 45 an Stirnflächen 46, 47 abgeschrägt sind und zwischen den Gleitlagersegmenten 45 zu deren Vorspannung bzw. Befestigung ein Keilelement 48 angeordnet wird, wie dies aus Fig. 9 ersichtlich ist, wobei über dieses Keilelement 48 die Gleitlagersegmente 45 gegen die innere Oberfläche des äußeren Ringelementes 41 gepresst werden. Es sind also auch bei dieser Ausführungsvariante die Gleitlagersegmente 45 beabstandet zueinander angeordnet - in Umfangsrichtung betrachtet - bedingt durch die dazwischen angeordneten Keilelemente 48.

Zur Anordnung der beiden Gleitlager 38, 39 zwischen dem inneren Ringelement 40 und dem äußeren Ringelement 41 besteht auch bei dieser Ausführungsvariante die Möglichkeit, im inneren Ringelement 40, das heißt an einer dem äußeren Ringelement zugewandten Oberfläche des inneren Ringelementes 40 und/oder an einer dem inneren Ringelement 40 zugewandten Oberfläche des äußeren Ringelementes 41 eine Nut vorzusehen.

Wie insbesondere aus den Fig. 7 und 8 ersichtlich ist, können an einem Segmentrücken 49 der Gleitlager 38, 39 Nuten 50 und/oder Bohrungen 51 zur Zuführung bzw. generell zur Führung von Schmieröl angeordnet sein, um in besonders belasteten Bereichen der Gleitlager 38, 39 einen Schmierfilm besser aufbauen zu können. Es sei allerdings erwähnt, dass das Lagerelement 7 nach der Erfindung vorzugsweise ausschließlich hydrodynamisch betreibbar ist, dass also keine Hydrostatik als Anfahrunterstützung erforderlich ist. Mit dem Begriff "ausschließlich hydrodynamisch" ist im Sinne der Erfindung gemeint, dass kein Öldruck von über 1 bar aufrechterhalten wird, sodass also nur eine Mindestmenge über die zumindest eine Nut und/oder die zumindest eine Bohrung 51 einer Gleitfläche 52 zugeführt wird. Es ist also über diese Nuten 50 bzw. Bohrungen 51 eine gezielte Zuführung von Öl pro Gleitlagersegment 45 möglich.

Selbstverständlich besteht auch bei der Ausführung mit den Gleitlager-Pads 20 die Möglichkeit über den Gleitlager-Padrücken 26 über entsprechende Nuten bzw. Bohrungen eine gezielte Ölzuführung zur Gleitschichtfläche bzw. Gleitschichtteilfläche 35 der Gleitlager-Pads 20 vorzunehmen.

Es sei weiters erwähnt, dass die Ausführungen zur Werkstoffwahl für die Gleitlager 8, 9 der ersten Ausführungsvariante der Erfindung auch auf die Gleitlager 38, 39 anwendbar sind, sodass diese Gleitlager 38, 39 bevorzugt auch als Mehrschichtgleitlager ausgeführt sind.

Sowohl die Gleitlager-Pads 20 als auch die Gleitlagersegmente 45 können nicht nur als Radialgleitlager ausgeführt sein, sondern auch an zumindest einer parallel zur Umfangsrichtung ausgebildeten Stirnfläche mit einem entsprechenden Gleitschichtwerkstoff versehen sein, sodass also eine zusätzliche axiale Lagerung über diese Gleitlager-Pads 20 bzw. die Gleitlagersegmente 45 erreicht wird.

Es ist dabei ebenfalls eine gezielte Ölzuführung möglich, wie dies zum Beispiel aus Fig. 8 ersichtlich ist, die in diesen Stirnflächen der Gleidagersegmente 45 entsprechende Ausnehmungen 53 für die Ölzuführung zeigt.

Der Austausch der Gleitlagersegmente 45 bzw. der Einbau dieser Gleitlagersegmente 45 in das Lagerelement 7 kann durch seitliches Herausnehmen aus dem bzw. seitliches Einschieben in das Lagerelement 7 - in axialer Richtung betrachtet - erfolgen.

Die Gleitlager-Pads 20 können hingegen über den Stator im Bereich einer Ölzuführung 54, wie dies in Fig. 5 dargestellt ist, entfernt werden. Dazu wird lediglich das Befestigungselement 27 gelöst und gegebenenfalls entfernt, ebenso wie das Abstandselement 14. In Folge dessen können diese Gleitlager-Pads 20 jeweils schräg nach unten aus den Nuten 23 herausgezogen werden. Der Einbau bzw. Austausch dieser Gleitlager-Pads 20 kann in genau umgekehrter Reihenfolge erfolgen.

Es ist also bei sämtlichen Ausführungsvarianten der Erfindung möglich, nur einzelne Teile der Gleitlager 8, 9 bzw. 38, 39 auszutauschen, sodass also nicht wie bei einem Wälzlager das gesamte Lagerelement 7 bzw. das gesamte Wälzlager ausgetauscht werden muss. Die Ausführungsform nach den Fig. 2 bis 5 hat zudem den Vorteil, dass dieses Lagerelement 7 ein Schrägrollenwälzlager, wie diese derzeit als Hauptlager zur Rotorlagerung eingesetzt werden, ersetzten kann, sodass also derartige Lagerelemente 7 im Zuge von Wartungsarbeiten auch die bislang verwendeten Wälzlager bei bestehenden Anlagen ersetzten können.

Die Ausführungsbeispiele zeigen mögliche Ausführungsvarianten des Lagerelementes 7, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch weitere Ausführungsvarianten, die durch Kombinationen einzelner Details der dargestellten und beschriebenen Ausführungsvariante möglich sind, vom Schutzumfang im Rahmen der Ansprüche mit umfasst.

Der Ordnung halber sei abschließend darauf hingewiesen, dass zum besseren Verständnis des Aufbaus des Lagerelementes 7 dieses bzw. dessen Bestandteile teilweise unmaßstäblich und/oder vergrößert und/oder verkleinert dargestellt wurden.

Die einzelnen in den Fig. 1 bis 9 gezeigten Ausführungen können den Gegenstand von eigenständigen, erfindungsgemäßen Lösungen bilden.

**Bezugszeichenaufstellung**

| | | | |
|---|---|---|---|
| 1 | Windkraftanlage | 42 | Rotornabe |
| 2 | Turm | 43 | Stator |
| 3 | Gondel | 44 | Abstand |
| 4 | Rotornabe | 45 | Gleitlagersegment |
| 5 | Rotorblatt | | |
| | | 46 | Stirnfläche |
| 6 | Generator | 47 | Stirnfläche |
| 7 | Lagerelement | 48 | Keilelement |
| 8 | Gleitlager | 49 | Segmentrücken |
| 9 | Gleitlager | 50 | Nut |
| 10 | Ringelement | | |
| | | 51 | Bohrung |
| 11 | Ringelement | 52 | Gleitfläche |
| 12 | Ring | 53 | Ausnehmung |
| 13 | Ring | 54 | Ölzuführung |
| 14 | Abstandselement | | |
| 15 | Befestigungsanordnung | | |
| | | | |
| 16 | Generator-Ständer | | |
| 17 | Maschinenträger | | |
| 18 | Ringnut | | |
| 19 | Winkel | | |
| 20 | Gleitlager-Pad | | |
| | | | |
| 21 | Länge | | |
| 22 | Breite | | |
| 23 | Nut | | |
| 24 | Nutengrund | | |
| 25 | Gleitfläche | | |
| | | | |
| 26 | Gleitlager-Padrücken | | |
| 27 | Befestigungselement | | |
| 28 | Beilagscheibe | | |
| 29 | Endbereich | | |
| 30 | Endbereich | | |
| | | | |
| 31 | Keil | | |
| 32 | Keil | | |
| 33 | Stützschicht | | |
| 34 | Gleitschicht | | |
| 35 | Gleitschichtteilfläche | | |
| | | | |
| 36 | Nut | | |
| 37 | Stirnseite | | |
| 38 | Gleitlager | | |
| 39 | Gleitlager | | |
| 40 | Ringelement | | |
| 41 | Ringelement | | |

## Patentansprüche

1. Windkraftanlage (1) mit einem Rotor der eine Rotornabe (4) aufweist, die sich auf einem Stator abstützt, wobei zwischen dem Rotor (4) und dem Stator ein Lagerelement (7) angeordnet ist, wobei das Lagerelement (7) zumindest ein inneres Ringelement (10,40) und zumindest ein äußeres Ringelement (11,41) aufweist, wobei zwischen dem inneren Ringelement (10, 40) und dem äußeren Ringelement (11, 41) eine Gleitlagerung ausgebildet ist, die durch zumindest zwei in axialem Abstand (44) zueinander angeordnete Gleitlager (8, 9, 38, 39) gebildet ist, wobei zumindest eines der oder die Gleitlager (8, 9) jeweils durch in Umfangsrichtung nebeneinander angeordnete, eine Stützschicht (33) und eine darauf angeordnete Gleitschicht (34) umfassende Gleitlager-Pads (20) gebildet ist oder sind oder wobei die Gleitlager (38, 39) durch Gleitlagersegmente (45) gebildet sind, **dadurch gekennzeichnet,**
- **dass** in der in der Ausführungsform der Gleitlager (38, 39) als Gleitlager-Pads (20) das äußere Ringelement (11) auf der den Gleitlager-Pads (20) zugewandten Oberfläche Nuten (23) aufweist und die Gleitlager-Pads (20) teilweise in diesen Nuten (23) angeordnet sind und die Nuten (23) einen sich in Richtung auf einen Nutengrund (24) erweiternden Querschnitt aufweisen und die Gleitlager-Pads (20) einen dazu entsprechenden Querschnitt aufweisen, und die Gleitlager-Pads (20) mit einem lösbaren Befestigungselement (27) am äußeren Ringelement (11) befestigt sind, wobei jeweils zwei in axialer Richtung nebeneinander angeordnete Gleitlager-Pads (20) über ein gemeinsames Befestigungselement (27) am äußeren Ringelement (11) fixiert sind,
- oder dass in der Ausführungsform der Gleitlager (38, 39) als Gleitlagersegmente (45) zwischen aufeinander zuweisenden Stirnflächen (46, 47) der Gleitlagersegmente (45) eines Gleitlagers (38, 39) ein Keilelement (48) angeordnet ist, mit dem die Gleitlagersegmente (45) gegen die innere Oberfläche des äußeren Ringelementes (41) gepresst werden.

2. Windkraftanlage (1) nach Anspruch 1, **dadurch gekennzeichnet, dass** die Anzahl der Gleitlager-Pads (20) pro Gleitlager (8, 9) ausgewählt ist aus einem Bereich mit einer unteren Grenze von D/10 und einer oberen Grenze von D/2, wobei D in cm der maximale Durchmesser des inneren Ringelementes (10) ist.

3. Windkraftanlage (1) nach einem der Ansprüche 1 oder 2, **dadurch gekennzeichnet, dass** die beiden Gleitlager (8, 9) in winkelig zueinander stehenden Ebenen angeordnet sind.

4. Windkraftanlage (1) nach Anspruch 3, **dadurch gekennzeichnet, dass** die beiden Ebenen in einem Winkel (19) zueinander angeordnet sind, der ausgewählt ist aus einem Bereich mit einer unteren Grenze von 30° und einer oberen Grenze von 75 °.

5. Windkraftanlage (1) nach einem der Ansprüche 1 bis 4, **dadurch gekennzeichnet, dass** die Nuten (23) einen schwalbenschwanzförmigen oder T-förmigen Querschnitt aufweisen.

6. Windkraftanlage (1) nach einem der Ansprüche 1 bis 5, **dadurch gekennzeichnet, dass** das innere Ringelement (10) aus zwei in axialer Richtung nebeneinander angeordneten und in axialer Richtung zueinander beabstandeten Ringen (12, 13) besteht, wobei gegebenenfalls zwischen den Ringen (12, 13) ein Abstandselement (14) angeordnet ist, und das Befestigungselement (27) zumindest teilweise zwischen den beiden Ringen (12, 13) angeordnet ist.

7. Windkraftanlage (1) nach einem der Ansprüche 1 bis 6, **dadurch gekennzeichnet, dass** die Gleitlager-Pads (20) an zumindest einer Stirnseite zumindest teilweise mit einer Rundung versehen sind.

8. Windkraftanlage (1) nach Anspruch 1, **dadurch gekennzeichnet, dass** die aufeinander zuweisenden Stirnflächen (46, 47) der Gleitlagersegmente (45) eines Gleitlagers (38, 39) abgeschrägt sind.

9. Windkraftanlage (1) nach einem der Ansprüche 1 bis 8, **dadurch gekennzeichnet, dass** die Gleitlager (8, 9, 38, 39) durch Mehrschichtgleitlager gebildet sind.

10. Windkraftanlage (1) nach Anspruch 9, **dadurch gekennzeichnet, dass** eine oberste Schicht der Mehrschichtgleitlager eine unterbrochene Oberfläche aufweist.

11. Windkraftanlage (1) nach einem der Ansprüche 1 bis 10, **dadurch gekennzeichnet, dass** zumindest eine Gleitschicht (34) der Gleitlager (8, 9, 38, 39) eine Härte von zumindest 75 HV(0,001) oder zwischen 25 HV (0,001) und 60 HV (0,001), wenn diese als Gleitlack ausgeführt ist, zumindest an der Gleitfläche (25) aufweist.

12. Windkraftanlage (1) nach einem der Ansprüche 1 bis 11, **dadurch gekennzeichnet, dass** das Lagerelement (7) ausschließlich hydrodynamisch betreibbar ist.

13. Windkraftanlage (1) nach einem der Ansprüche 1 bis 12, **dadurch gekennzeichnet, dass** das innere Ringelement (40) des Lagerelementes (7) einen Teil der Rotornabe (4) und das äußere Ringelement (41) einen Teil des Stators bilden.

## Claims

1. A wind turbine (1) with a rotor which has a rotor hub (4), which rests on a stator,
wherein between the rotor (4) and the stator a bearing element (7) is arranged, wherein the bearing element (7) has at least one inner ring element (10, 40) and at least one outer ring element (11,41), wherein between the inner ring element (10, 40) and the outer ring element (11, 41) a plain bearing is formed, which is formed by at least two plain bearings (8, 9, 38, 39) arranged at an axial distance (44) from one another, wherein at least one of the, or the, plain bearings (8, 9) is or are formed respectively by plain bearing pads (20) arranged next to one another in circumferential direction, comprising a support layer (33) and an anti-frictional layer (34) arranged thereon, or wherein the plain bearings (38, 39) are formed by plain bearing segments (45), **characterized in that**
- in the embodiment of the plain bearings (38, 39) as plain bearing pads (20), the outer ring element (11) comprises grooves (23) on the surface facing the plain bearing pads (20) and the plain bearing pads (20) are partly arranged in said grooves (23), and the grooves (23) have a cross-section widening in the direction of a groove base (24), and the plain bearing pads (20) have a cross-section corresponding thereto, and the plain bearing pads (20) are fastened on the outer ring element (11) by a detachable securing element (27), wherein respectively two plain bearing pads (20) arranged adjacent to one another in axial direction are fixed on the outer ring element (11) via a common securing element (27),
- or that in the embodiment of the plain bearings (38, 39) as plain bearing segments (45) a wedge element (48) is arranged between end faces (46, 47) of the plain bearing segments (45) of a plain bearing (38, 39) pointing towards one another, with which wedge element the sliding bearing segments (45) are pressed against the inner surface of the outer ring element (41).

2. The wind turbine (1) according to claim 1, **characterized in that** the number of plain bearing pads (20) per plain bearing (8, 9) is selected from a range with a lower limit of D/10 and an upper limit of D/2, wherein D in cm is the maximum diameter of the inner ring element (10).

3. The wind turbine (1) according to one of claims 1 or 2, **characterized in that** the two plain bearings (8, 9) are arranged in planes that are at an angle to one another.

4. The wind turbine (1) according to claim 3, **characterized in that** the two planes are arranged at an angle (19) relative to one another which is selected from a range with a lower limit of 30 ° and an upper limit of 75 °.

5. The wind turbine (1) according to one of claims 1 to 4, **characterized in that** the grooves (23) have a dovetail-shaped or T-shaped cross section.

6. The wind turbine (1) according to one of claims 1 to 5, **characterized in that** the inner ring element (10) consists of two rings (12, 13) arranged next to one another in axial direction and spaced apart from one another in axial direction, wherein if necessary a spacer element (14) is arranged between the rings (12, 13), and the securing element (27) is arranged at least partly between the two rings (12, 13).

7. The wind turbine (1) according to one of claims 1 to 6, **characterized in that** the plain bearing pads (20) are provided on at least one end side at least partly with a rounded section.

8. The wind turbine (1) according to claim 1, **characterized in that** the end faces (46, 47) of the plain bearing segments (45) of a plain bearing (38, 39) which point towards one another are slanted.

9. The wind turbine (1) according to one of claims 1 to 8, **characterized in that** the plain bearings (8, 9, 38, 39) are in the form of multi-layered plain bearings.

10. The wind turbine (1) according to claim 9, **characterized in that** a topmost layer of the multi-layered plain bearings has an interrupted surface.

11. The wind turbine (1) according to one of claims 1 to 10, **characterized in that** at least one anti-frictional layer (34) of the plain bearings (8, 9, 38, 39) has a hardness of at least 75 HV (0.001) or between 25 HV (0.001) and 60 HV (0.001), if the latter is in the form of an anti-frictional paint, at least on the anti-frictional surface (25).

12. The wind turbine (1) according to one of claims 1 to 11, **characterized in that** the bearing element (7) can only be operated hydrodynamically.

13. The wind turbine (1) according to one of claims 1 to 12, **characterized in that** the inner ring element (40) of the bearing element (7) forms a part of the rotor hub (4) and the outer ring element (41) forms a part of the stator.

## Revendications

1. Éolienne (1) avec un rotor qui comprend un moyeu de rotor (4), qui s'appuie sur un stator, un élément de palier (7) étant disposé entre le rotor (4) et le stator, l'élément de palier (7) comprenant au moins un élément annulaire interne (10, 40) et au moins un élément annulaire externe (11, 41), un palier lisse étant prévu entre l'élément annulaire interne (10, 40) et l'élément annulaire externe (11, 41), qui est constitué d'au moins deux paliers lisses (8, 9, 38, 39) disposés à une distance axiale (44) entre eux, au moins un des ou les paliers lisses (8, 9) étant constitués chacun par des patins de paliers lisses (20), disposés les uns à côté des autres sur la circonférence, comprenant une couche d'appui (33) et une couche de glissement (34) disposé au-dessus ou les paliers lisses (38, 39) étant constitués de segments de paliers lisses (45), **caractérisée en ce que**
- dans le mode de réalisation des paliers lisses (38, 39) sous la forme de patins de paliers lisses (20), l'élément annulaire externe (11) comprend, sur la surface orientée avec les patins de paliers lisses (20), des rainures (23) et les patins de paliers lisses (20) sont partiellement disposés dans ces rainures (23) et les rainures (23) présentent une section transversale s'élargissant dans la direction d'un fond de rainure (24) et les patins de paliers de glissement (20) présentent une section transversale correspondante et les patins de paliers lisses (20) étant fixés avec un élément de fixation amovible (27) sur l'élément annulaire externe (11), deux patins de paliers lisses (20) disposés l'un à côté de l'autre dans la direction axiale étant fixés par l'intermédiaire d'un élément de fixation (27) commun sur l'élément annulaire externe (11),
- ou, dans le mode de réalisation des paliers lisses (38, 39) sous la forme de segments de paliers lisses (45), entre des faces frontales (46, 47), orientées l'une vers l"autre, des segments de palier lisse (45) d'un palier lisse (38, 39), se trouve un élément de calage (48) avec lequel les segments de palier lisse (45) sont comprimés contre la surface interne de l'élément annulaire externe (41).

2. Éolienne (1) selon la revendication 1, **caractérisée en ce que** le nombre de patins de palier lisse (20) par palier lisse (8, 9) est sélectionné sur une plage avec une limite inférieure égale à D/10 et une limite supérieure égale à D/2, D étant le diamètre maximale, en cm, de l'élément annulaire interne (10).

3. Éolienne (1) selon l'une des revendications 1 ou 2, **caractérisée en ce que** les deux paliers lisses (8, 9) sont disposés sur des plans formant des angles entre eux.

4. Éolienne (1) selon la revendication 3, **caractérisée en ce que** les deux plans sont disposés avec un angle (19) entre eux, qui est sélectionné dans une plage avec une limite inférieure de 30° et une limite supérieure de 75°.

5. Éolienne (1) selon l'une des revendications 1 à 4, **caractérisée en ce que** les rainures (23) présentent une section transversale en forme de queue d'aronde ou en forme de T.

6. Éolienne (1) selon l'une des revendications 1 à 5, **caractérisée en ce que** l'élément annulaire interne (10) est constitué de deux bagues (12, 13) disposées l'une à côté de l'autre dans la direction axiale et disposées à une certaine distance entre elles dans la direction axiale, le cas échéant, entre les bagues (12, 13), un élément d'écartement (14) étant disposé et l'élément de fixation (27) étant disposé au moins partiellement entre les deux bagues (12, 13).

7. Éolienne (1) selon l'une des revendications 1 à 6, **caractérisée en ce que** les patins de palier lisse (20) présentent, au moins au niveau de leur face frontale, au moins partiellement un arrondi.

8. Éolienne (1) selon la revendication 1, **caractérisée en ce que** les faces frontales (46, 47) orientées l'une vers l'autre des segments de palier lisse (45) d'un palier lisse (38, 39) sont chanfreinées.

9. Éolienne (1) selon l'une des revendications 1 à 8, **caractérisée en ce que** les paliers lisses (8, 9, 38, 39) sont constitués de paliers lisses multicouches.

10. Éolienne (1) selon la revendication 9, **caractérisée en ce qu'**une couche supérieure des paliers lisses multicouches présente une surface interrompue.

11. Éolienne (1) selon l'une des revendications 1 à 10, **caractérisée en ce qu'**au moins une couche de glissement (34) des paliers lisses (8, 9, 38, 39) présente une dureté d'au moins 75 HV (0,001) ou entre 25 HV (0,001) et 60 HV (0,001), lorsque celle-ci est réalisée sous la forme d'une peinture de glissement, au moins au niveau de la surface de glissement (25).

12. Éolienne (1) selon l'une des revendications 1 à 11, **caractérisée en ce que** l'élément de palier (7) peut être exploité de manière exclusivement hydrodynamique.

13. Éolienne (1) selon l'une des revendications 1 à 12, **caractérisée en ce que** l'élément annulaire interne (40) de l'élément de palier (7) constitue une partie du moyeu du rotor (4) et l'élément annulaire externe (41) constitue une partie du stator.
